# EUROPÄISCHE PATENTSCHRIFT

(11) **EP 0 553 624 B1**
(45) Veröffentlichungstag und Bekanntmachung des Hinweises auf die Patenterteilung: **15.11.1995**
(21) Anmeldenummer: 93100245.5
(22) Anmeldetag: 09.01.1993
(51) Int. Cl.: F15B 15/14, F15B 15/28, B60K 23/02

(54) **Arbeitszylinder mit einem Arbeitskolben**
Power cylinder with a power piston
Vérin de travail avec un piston de travail

(30) Priorität: 29.01.1992 DE 4202422
(43) Veröffentlichungstag der Anmeldung: 04.08.1993
(73) Patentinhaber: ROBERT BOSCH GMBH, 70442 Stuttgart (DE)
(72) Erfinder: Roether, Friedbert, W-7121 Cleebronn (DE)

(56) Entgegenhaltungen:
- EP-A- 0 172 011
- WO-A-90/07064
- DE-A- 3 909 904
- DE-A- 4 020 368
- DE-A- 4 022 447
- US-A- 4 207 807

## Beschreibung

Die Erfindung geht aus von einem Arbeitszylinder nach der Gattung des Anspruchs 1.

Es ist schon ein solcher Arbeitszylinder bekannt (DE-A-40 20 368), welcher als Kupplungssteller im Motorraum eines Kraftfahrzeugs Verwendung findet. An einen solchen Arbeitszylinder werden zum Teil extreme Anforderungen gestellt: Zum einen soll er ein geringes Gewicht aufweisen, zum anderen bei sehr tiefen und bei hohen Temperaturen im Motorraum des Fahrzeugs während einer langen Betriebsdauer trotz der gegebenen Verschmutzung funktionsfähig bleiben. Dabei ist die Führung und Abdichtung der Kolbenstange im Zylinderdeckel schwierig zu beherrschen.

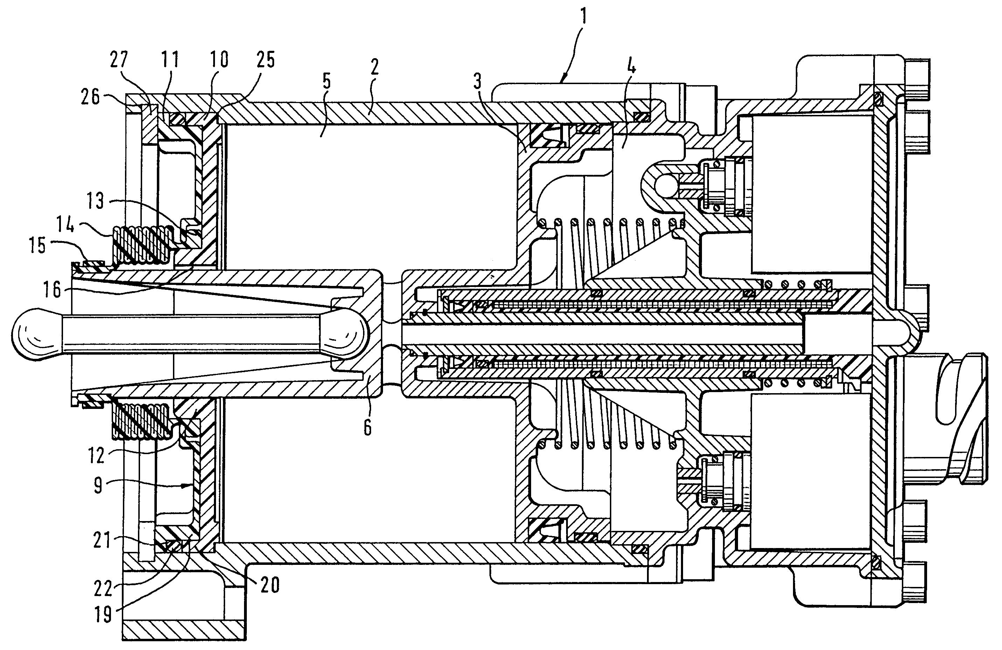

Aus US-A-4 207 807 (Figuren 3 bis 6) ist ein Arbeitszylinder mit einem aus drei scheibenförmigen Bauteilen bestehenden Zylinderdeckel bekannt. Zwischen zwei aus Kunststoff gefertigten Deckelteilen sind ein Lager sowie mehrere Dichtungsringe für eine Kolbenstange des Arbeitszylinders aufgenommen. Außerdem dient ein Deckelteil der Luftfuhrung im Arbeitszylinder. Das dritte, außenliegende Deckelteil besteht aus Metall und ist dazu bestimmt, die auf die anderen Deckelteile und die Dichtungen wirkenden Kräfte aufzunehmen. Der konstruktive Aufwand dieses Arbeitszylinders ist relativ groß.

### Vorteile der Erfindung

Der erfindungsgemäße Arbeitszylinder mit den kennzeichnenden Merkmalen des Anspruchs 1 hat demgegenüber den Vorteil, daß zur optimalen Lösung von Teilaufgaben hierzu besonders abgestimmte Bauteile herangezogen werden: Dabei übernimmt das eine Bauteil die Führungsfunktion, das andere Bauteil die Stütz- und Tragefunktion. Extreme Anforderungen lassen sich auf diese Weise leichter erfüllen.

Durch die in den Unteransprüchen aufgeführten Maßnahmen sind vorteilhafte Weiterbildungen und Verbesserungen des im Hauptanspruch angegebenen Arbeitszylinders möglich.

Die im Anspruch 2 angegebene Maßnahmen ist insofern vorteilhaft, als der Werkstoff des ersten Bauteils besonders gut als Lagerwerkstoff geeignet ist, während der Werkstoff des zweiten Bauteils einen sehr niedrigen, etwa Stahl entsprechenden Ausdehnungskoeffizienten hat und daher auch bei hoher Temperaturbeanspruchung besonders formstabil ist.

Mit der im Anspruch 3 gekennzeichneten Ausgestaltung der Erfindung wird auf einfache Weise neben einer ausreichend großen, geringer Flächenpressung ausgesetzten Führungsfläche auch eine sichere Abdichtung dieser Führungsfläche gegen Verschmutzung mit der erforderlichen Belüftung des Dichtelementes erzielt.

Die im Anspruch 4 offenbarte Weiterbildung der Erfindung ermöglicht ohne zusätzlichen Aufwand die Befestigung des Dichtelements beim Fügen der Einzelteile des Zylinderdeckels.

Mit der im Anspruch 5 angegebenen Maßnahme wird einerseits der hoher Wärmeausdehnung unterworfene erste Bauteil in radialer Richtung zwischen dem zweiten Bauteil und dem Zylindermantel eingespannt und damit in seiner Form stabilisiert, andererseits wird ohne zusätzlichen Aufwand Raum für die Anordnung eines mit dem Zylindermantel zusammenwirkenden Dichtelementes geschaffen.

Die im Anspruch 6 wiedergegebene Ausgestaltung der Erfindung ermöglicht in einfacher Weise ein schnelles Fügen des Zylinderdeckels im Zylindermantel.

Mit der im Anspruch 7 gekennzeichneten Weiterbildung der Erfindung werden auf einfache Weise Toleranzen ausgeglichen.

### Zeichnung

Ein Ausführungsbeispiel der Erfindung ist in der Zeichnung anhand eines Längsschnittes durch einen Arbeitszylinder vereinfacht dargestellt und in der nachfolgenden Beschreibung näher erläutert.

### Beschreibung des Ausführungsbeispiels

Ein in der Zeichnung dargestellter Arbeitszylinder 1 weist einen innerhalb eines Zylindermantels 2 aufgenommenen Arbeitskolben 3 auf, der eine Arbeitskammer 4 von einer Atmungskammer 5 trennt. An den Arbeitskolben 3 ist eine die Atmungskammer 5 durchdringende Kolbenstange 6 angeformt. Der Zylindermantel 2 und der Arbeitskolben 3 mit Kolbenstange 6 bestehen aus druckgegossenem Aluminium.

Die Kolbenstange 6 des zur Betätigung einer Fahrzeug-Kupplung bestimmten Arbeitszylinders 1 ist in einem auf der Seite der Atmungskammer 5 am Zylindermantel 2 abgestützten Zylinderdeckel 9 längsgeführt. Der Zylinderdeckel 9 besteht aus zwei scheibenförmigen Bauteilen 10 und 11, die beide am Innenumfang des Zylindermantels 2 angreifen. Das auf der Seite der Atmungskammer 5 angeordnete erste Bauteil 10 des Zylinderdeckels 9 hat radial innen einen Bund 12, der über seine gesamte axiale Erstreckung die Kolbenstange 6 trägt. Auf den kammerabgewandt gerichteten Bund 12 ist ein Befestigungswulst 13 eines Dichtbalges 14 aufgeschoben. Der die Kolbenstange 6 umhüllende Dichtbalg 14 ist am Kolbenstangenende mit einem Spannband 15 druckdicht befestigt. Für den Luftaustausch zwischen der Atmungskammer 5 und dem Dichtbalg 14 weist der Bund 12 des ersten Bauteils 10 wenigstens eine Längsnut 16 auf.

Das zweite Bauteil 11 des Zylinderdeckels 9 ist auf der kammerabgewandten Seite des ersten Bauteils 10 angeordnet. Das zweite Bauteil 11 übergreift den Befestigungswulst 13 des Dichtbalges 14, so daß dieser zwischen dem ersten Bauteil 10 und dem zweiten Bauteil 11 druckdicht eingespannt ist. Zylindermantelseitig weist das zweite Bauteil 11 einen Absatz 19 auf. Das erste Bauteil 10 hat an seinem zylindermantelseitigen Rand einen axial gegen das zweite Bauteil 11 gerichteten Bund 20, mit dem es den Absatz 19 des zweiten Bauteils 11 spielfrei übergreift. Der Bund 20 des ersten Bauteils 10 besitzt eine kleinere axiale Erstreckung als der Absatz 19 des zweiten Bauteils 11. Es ist somit eine gegen den Zylindermantel 2 offene Nut 21 zur Aufnahme eines Dichtungsringes 22 gebildet, mit welchem der Zylinderdeckel 9 gegen den Zylindermantel 2 abgedichtet ist.

Der Zylinderdeckel 9 ist von der offenen Seite des Zylindermantels 2 her in diesen eingefügt. Dabei ist das erste Bauteil 10 an einer Stufe 25 des Zylindermantels 2 angeschlagen. An das zweite Bauteil 11 angrenzend besitzt der Zylindermantel 2 eine Nut 26, in der ein den Zylinderdeckel 9 axial fixierender Sicherungsring 27 eingesprengt ist. Das zweite Bauteil 11 ist mit geringer Konizität ausgebildet. Beide Bauteile 10 und 11 sind daher mit Vorspannung gegeneinander abgestützt, so daß der Zylinderdeckel 9 axial spielfrei zwischen der Stufe 25 des Zylindermantels 2 und dem Sicherungsring 27 sitzt.

Das erste Bauteil 10 besteht aus Polyamid, einem gute Gleiteigenschaften aufweisenden Werkstoff, der jedoch einen relativ großen linearen Wärmeausdehnungskoeffizienten von 80 - 100 · 10⁻⁶ 1/K hat. Das zweite Bauteil 11 ist aus mit 50 % Glasfaser verstärktem Polyarylamid geformt. Dieser Werkstoff hat einen linearen Wärmeausdehnungskoeffizienten von 11 · 10⁻⁶ 1/K, welcher demjenigen von Stahl entspricht. Das zweite Bauteil 11 ist daher besonders formstabil und kann das erste Bauteil 10 beim Bewegen der Kolbenstange 6 axial stützen. Außerdem kann das zweite Bauteil 11 aufgrund des formschlüssigen Einschlusses des Bundes 20 weitgehend verhindern, daß sich bei tiefen Temperaturen das erste Bauteil 10 radial vom Zylindermantel 2 löst. Bei hohen Temperaturen verhindert der Zylindermantel 2 weitgehend ein Aufweiten des ersten Bauteils 10.

## Patentansprüche

1. Arbeitszylinder (1) mit einem Arbeitskolben (3), der eine Arbeitskammer (4) von einer Atmungskammer (5) trennt, und mit einer Kolbenstange (6), die auf der Seite der Atmungskammer (5) mit einem am Zylindermantel (2) abgestutzten Zylinderdeckel (9) abgedichtet gefuhrt ist, dadurch gekennzeichnet, daß der Zylinderdeckel (9) aus zwei scheibenförmigen Bauteilen (10, 11) besteht, die beide am Innenumfang des Zylindermantels (2) angreifen und von denen das erste Bauteil (10) die Kolbenstange (6) fuhrt und das zweite Bauteil (11) das erste Bauteil (10) axial stutzt sowie zusammenwirkend mit dem ersten Bauteil (10) dem Zylindermantel (2) und der Kolbenstange (6) zugeordnete Dichtelemente, wie z. B. einen Dichtbalg (14) und einen Dichtungsring (22) festlegt.

2. Arbeitszylinder nach Anspruch 1, dadurch gekennzeichnet, daß das erste Bauteil (10) aus einem Polyamid und das zweite Bauteil (11) aus einem glasfaserverstärkten Polyarylamid besteht.

3. Arbeitszylinder nach Anspruch 1, dadurch gekennzeichnet, daß das erste Bauteil (10) einen Bund (12) hat, der über seine gesamte axiale Erstreckung die Kolbenstange (6) trägt und wenigstens eine Längsnut (16) für den Luftaustausch zwischen der Atmungskammer (5) und einem Dichtbalg (14) aufweist, der die Kolbenstange (6) umhüllend einerseits an dieser und andererseits außen am Zylinderdeckel (9) befestigt ist.

4. Arbeitszylinder nach Anspruch 3, dadurch gekennzeichnet, daß der Dichtbalg (14) einen Befestigungswulst (13) aufweist, der zwischen dem kolbenabgewandt angeordneten Bund (12) des ersten Bauteils (10) und dem zweiten Bauteil (11) eingespannt ist.

5. Arbeitszylinder nach Anspruch 1, dadurch gekennzeichnet, daß das erste Bauteil (10) an seinem zylindermantelseitigen Rand einen axial gegen das zweite Bauteil (11) gerichteten Bund (20) besitzt, mit dem es das zweite Bauteil (11) übergreift und mit diesem eine gegen den Zylindermantel (2) offene Nut (21) bildet, in der ein Dichtungsring (22) aufgenommen ist.

6. Arbeitszylinder nach Anspruch 1, dadurch gekennzeichnet, daß der Zylinderdeckel (9) auf der Seite der Atmungskammer (5) an einer Stufe (25) des Zylindermantels (2) abgestützt und auf der freien Seite mit einem in eine Nut (26) des Zylindermantels (2) eingesprengten Sicherungsring (27) axial gehalten ist.

7. Arbeitszylinder nach Anspruch 6, dadurch gekennzeichnet, daß beide Bauteile (10, 11) des Zylinderdeckels (9) durch eine konische Formgebung eines der Bauteile axial mit Vorspannung gegeneinander abgestützt sind, so daß der Zylinderdeckel (9) axial spielfrei zwischen der Stufe (25) des Zylindermantels (2) und dem Sicherungsring (27) sitzt.

## Claims

1. Power cylinder (1) with a power piston (3) which separates a working chamber (4) from an aspiration chamber (5) and with a piston rod (6) which is guided on the side of the aspiration chamber (5) so as to be sealed with a cylinder cover (9) supported on the cylinder casing (2), characterized in that the cylinder cover (9) consists of two disc-shaped components (10, 11) which both engage on the inner circumference of the cylinder casing (2) and of which the first component (10) guides the piston rod (6) and the second component (11) supports the first component (10) axially and, interacting with the first component (10), fixes sealing elements, such as, for example, a sealing bellows (14) and a sealing ring (22), assigned to the cylinder casing (2) and the piston rod (6).

2. Power cylinder according to Claim 1, characterized in that the first component (10) consists of a polyamide and the second component (11) of a glass fibre-reinforced polyarylamide.

3. Power cylinder according to Claim 1, characterized in that the first component (10) has a collar (12) which bears the piston rod (6) over its entire axial extent and has at least one longitudinal groove (16) for the air exchange between the aspiration chamber (5) and a sealing bellows (14) which is attached, on the one hand, to the piston rod (6), surrounding the latter, and, on the other hand, to the outside of the cylinder cover (9).

4. Power cylinder according to Claim 3, characterized in that the sealing bellows (14) has an attachment bead (13) which is braced between the collar (12) of the first component (10), facing away from the piston, and the second component (11).

5. Power cylinder according to Claim 1, characterized in that the first component (10) has, on its edge on the cylinder casing side, a collar (20) which is directed axially towards the second component (11) and with which it engages over the second component (11) and, with the latter, forms a groove (21) which is open towards the cylinder casing (2) and in which a sealing ring (22) is received.

6. Power cylinder according to Claim 1, characterized in that the cylinder cover (9) is supported, on the side of the aspiration chamber (5), on a step (25) of the cylinder casing (2) and, on the free side, is held axially by a securing ring (27) which is snapped into a groove (26) in the cylinder casing (2).

7. Power cylinder according to Claim 6, characterized in that both components (10, 11) of the cylinder cover (9) are supported axially against one another with prestress due to a conical shaping of one of the components, so that the cylinder cover (9) is seated axially without clearance between the step (25) of the cylinder casing (2) and the securing ring (27).

## Revendications

1. Vérin (1) avec un piston (3) qui sépare une chambre de travail (4) d'une chambre de respiration (5), et avec une tige de piston (6) qui est guidée de façon étanche du côté de la chambre de respiration (5) par un couvercle de vérin (9) qui s'appuie sur l'enveloppe de vérin (2), vérin caractérisé en ce que le couvercle de vérin (9) se compose de deux pièces constitutives (10, 11) en forme de disque, qui toutes les deux viennent en prise sur le pourtour intérieur de l'enveloppe du vérin (2) et dont l'une, la première pièce constitutive (10), guide la tige de piston (6), tandis que l'autre, la seconde pièce constitutive (11), soutient axialement la première pièce constitutive (10) et, en coopérant avec la première pièce constitutive (10), bloque les éléments d'étanchéité associés à l'enveloppe de vérin (2) et à la tige de piston (6), tels que par exemple un coussinet d'étanchéité (14) et une bague d'étanchéité (22).

2. Vérin selon la revendication 1, caractérisé en ce que la première pièce constitutive (10) est réalisée en un polyamide et la seconde pièce constitutive (11) en polyarylamide renforcé par des fibres de verre.

3. Vérin selon la revendication 1, caractérisé en ce que la première pièce constitutive (10) a un collet (12) qui supporte sur toute son étendue axiale la tige de piston (6), et au moins une rainure longitudinale (16) pour l'échange de l'air entre la chambre de respiration (5) et un coussinet d'étanchéité (14) qui est fixé d'une part sur la tige de piston (6) en l'entourant, et d'autre part à l'extérieur sur le couvercle de vérin (9)

4. Vérin selon la revendication 3, caractérisé en ce que le Coussinet d'étanchéité (14) présente un bourrelet de fixation (13) qui est serré entre le collet (12) de la première pièce constitutive (10), tourné à l'opposé du piston, et la deuxième pièce constitutive (11).

5. Vérin selon la revendication 1, caractérisé en ce que la première pièce constitutive (10) possède sur son bord situé du côté de l'enveloppe de vérin, un collet axial (20) dirigé contre la seconde pièce constitutive (11), collet avec lequel vient en prise la seconde pièce constitutive (11) et qui forme avec celle-ci une rainure ouverte contre l'enveloppe de vérin (2), rainure dans laquelle on loge une bague d'étanchéité (22).

6. Vérin selon la revendication 1, caractérisé en ce que le couvercle de vérin (9) s'appuie, du côté de la chambre de respiration (5), sur un gradin (25) de l'enveloppe de vérin (2) et, du côté libre, est maintenu axialement par une bague de sécurité (27) engagée à force dans une rainure (26) de l'enveloppe de vérin (2).

7. Vérin selon la revendication 6, caractérisé en ce que les deux pièces constitutives (10, 11) du couvercle de vérin (9) sont abutées, par une forme conique de l'une des pièces constitutives, l'une contre l'autre de façon axiale avec précontrainte, de telle sorte que le couvercle de vérin (9) se trouve axialement sans jeu entre le gradin (25) de l'enveloppe de vérin (2) et la bague de sécurité (27).
